# EUROPÄISCHE PATENTSCHRIFT

(11) **EP 2 975 358 B1**
(45) Veröffentlichungstag und Bekanntmachung des Hinweises auf die Patenterteilung: **16.08.2017**
(21) Anmeldenummer: 15176770.4
(22) Anmeldetag: 15.07.2015
(51) Int. Cl.: G01B 7/02, B65F 3/00, G01B 7/28, G01B 7/30, B60R 3/00

(54) **TRITTBRETTVORRICHTUNG**
STEP DEVICE
DISPOSITIF DE MARCHEPIED

(30) Priorität: 16.07.2014 DE 202014103270 U
(43) Veröffentlichungstag der Anmeldung: 20.01.2016
(73) Patentinhaber: Zöller-Kipper GmbH, 55130 Mainz (DE)
(72) Erfinder: SILVAN, Eckhard, 15834 Rangsdorf (DE); FEYERABEND, Lutz, 16562 Bergfelde (DE)
(74) Vertreter: Mehler Achler

(56) Entgegenhaltungen:
- EP-A1- 1 247 765
- DE-A1- 10 029 700
- DE-A1- 10 030 487
- DE-T2-602007 000 012
- US-A- 6 100 682

## Beschreibung

Die Erfindung betrifft eine Trittbrettvorrichtung mit den im Oberbegriff stehenden Merkmalen des Anspruchs 1.

Am Heck von Müllfahrzeugen sind üblicherweise ausklappbare Trittbretter angeordnet, auf denen die Müllwerker während langsamer Vorwärtsfahrt stehen können. Ein solches Trittbrett ist beispielsweise aus der G 92 06 606.2 bekannt. Das Trittbrett ist über Tragarme schwenkbar am Heck des Fahrzeugs befestigt. Das Benutzen der Trittbretter ist allerdings bei Rückwärtsfahrt und schneller Vorwärtsfahrt über 30 km/h nicht zulässig und wird über entsprechende Sicherheitssysteme überwacht. Im betrieblichen Alltag werden diese Sicherheitssysteme häufig derart manipuliert, dass die Sicherheitsfunktion außer Kraft gesetzt und beispielsweise eine Rückwärtsfahrt des Müllfahrzeugs auch dann möglich ist, wenn der Müllwerker auf dem Trittbrett steht. DE10029700 A1 beschreibt eine Trittbrettvorrichtung gemäß den Oberbegriff des Patentanspruchs 1. Aus der DE 10 2006 023 501 B3 ist eine Trittbrettvorrichtung mit einer Belastungserkennungseinrichtung bekannt geworden, die eine Manipulation der Sicherheitsfunktion weitgehend ausschließen soll. Hierfür ist der Tragarm des Trittbrettes an einem Bauteil des Fahrzeuges federnd und um eine Schwenkachse schwenkbar gelagert. Die Belastungserkennung weist einen Schalter sowie einen ersten und zweiten Schalthebel auf, die derart an dem Tragarm angeordnet sind, dass bei Belastung durch einen auf dem Trittbrett stehenden Müllwerker der Schalter von einem oder beiden Schalthebel(n) betätigt wird. In der Praxis hat sich jedoch herausgestellt, dass auch diese bekannte Trittbrettvorrichtung insbesondere durch das Einhängen von Ketten zwischen dem Trittbrett und dem Fahrzeug manipulierbar ist.

Somit lag der Erfindung die Aufgabe zugrunde, eine mit einfachen Mitteln nicht zu manipulierende Trittbrettvorrichtung bereitzustellen. DE10029700 A1 beschreibt eine Trittbrettvorrichtung gemäß den Oberbegriff des Patentanspruchs 1. Die Aufgabe wird mit den Merkmalen des Anspruchs 1 gelöst.

Die Trittbrettvorrichtung ist dadurch gekennzeichnet, dass ein erstes Element mit einer profilierten Oberfläche ausgebildet ist und ein zweites Element den Positionsmesssensor trägt, wobei das erste Element um das Drehlager schwenkbar zum Fahrzeug und das zweite Element ortsfest zum Fahrzeug oder das erste Element ortsfest zum Fahrzeug und das zweite Element um das Drehlager schwenkbar zum Fahrzeug angeordnet ist, dass der Positionsmesssensor der profilierten Oberfläche gegenüberliegt und dass bei einer Schwenkbewegung des Trittbrettes eine Relativbewegung zwischen dem Positionsmesssensor und der profilierten Oberfläche erfolgt.

Unter der Schwenkposition wird der Anstellwinkel des Trittbrettes zur Fahrbahn verstanden, wobei die Schwenkposition üblicherweise zwischen einer um ca. 90° zur Fahrbahn hochgeklappten Position des Trittbrettes und einer zur Fahrbahn parallelen Position verstellbar ist.

Unter einer profilierten Oberfläche wird eine Außenfläche eines Bauelementes verstanden, in oder auf welcher beispielsweise zumindest abschnittsweise Rippen, Ausnehmungen, Bohrungen oder andere geometrische Oberflächenveränderungen ausgeformt sind, die geeignet sind, von dem Positionsmesssensor im Rahmen einer Abstandsmessung erfasst zu werden. Die profilierte Oberfläche weist insbesondere eine treppenartige oder gestufte Oberfläche auf, die vorzugsweise in die gerundete Außenfläche des ersten Elementes eingebracht ist. Aufgrund der rotatorischen Bewegung des Trittbrettes gegenüber dem Fahrzeug und der dadurch resultierenden kreisförmigen Relativbewegung des ersten und zweiten Elementes zueinander ist eine gerundete Außenfläche bevorzugt.

Bei dem verwendeten Positionsmesssensor handelt es sich insbesondere um einen berührungslos arbeitenden Näherungsschalter, der besonders bevorzugt als induktiv, kapazitiv, magnetisch oder optisch wirkender Näherungsschalter ausgebildet ist. Derartige berührungslos arbeitende Schalter haben den Vorteil, dass sie sich gegenüber mechanisch arbeitenden Sensoren, die grundsätzlich auch geeignet sind, neben geringen baulichen Abmessungen auf einen exakten Schwellenwert einstellen lassen. Dadurch kann insbesondere bei einer stufenförmigen Ausführung der profilierten Oberfläche das Ausgangssignal als Binärcode von dem Positionsmesssensor bereitgestellt werden. Der Binärcode ist ein Code, in dem Informationen durch Sequenzen von zwei verschiedenen Symbolen (zum Beispiel 1/0 oder wahr/falsch) dargestellt werden.

Gemäß der ersten Alternative der Erfindung ist das erste Element um das Drehlager schwenkbar am Fahrzeug und das zweite Element ortsfest zum Fahrzeug angeordnet. Das zweite Element hält den Positionsmesssensor ortsfest zum Fahrzeug über dem darunter schwenkenden ersten Element, welches unmittelbarer Bestandteil des Drehlagers ist und im Kraftfluss zwischen Fahrzeug und Trittbrett liegt.

Gemäß der zweiten Alternative der Erfindung ist das erste Element ortsfest zum Fahrzeug und das zweite Element um das Drehlager schwenkbar zum Fahrzeug angeordnet. Hierbei ist das zweite Element vorzugsweise mit dem Trittbrett verbunden. Bei dieser Ausführungsform schwenkt der Positionsmesssensor zusammen mit dem Trittbrett um die Schwenkachse des Drehlagers und die profilierte Oberfläche des ersten Elementes verbleibt immer in derselben Position zum Fahrzeug.

Vorzugsweise weist die profilierte Oberfläche des ersten Elements bezogen auf eine Schwenkachse des Drehlagers achsnahe und achsferne Oberflächenabschnitte auf. Das Trittbrett schwenkt um die Schwenkachse. Die Schwenkachse ist bezüglich des Fahrzeuges und des Trittbrettes stets ortsfest und damit unabhängig von der Schwenkposition des Trittbrettes. Sowohl die achsnahen als auch die achsfernen Oberflächenabschnitte verlaufen in Umfangsrichtung des ersten Elementes. Achsferne und achsnahe Oberflächenabschnitte gehen in Umfangsrichtung ineinander über.

Es sollten dabei vorteilhafterweise mindestens vier Oberflächenabschnitte vorgesehen sein, wobei zweckmäßigerweise jedem Oberflächenabschnitt eine Schwenkposition des Trittbrettes zugeordnet ist. Während des Schwenkvorganges erkennt der Positionsmesssensor den gerade vor diesem befindlichen Oberflächenabschnitt. Dabei korrespondiert ein erster Oberflächenabschnitt mit einer hochgeklappten Trittbrettposition, ein zweiter Oberflächenabschnitt mit der Trittbrettposition während des Schwenkens, ein dritter Oberflächenabschnitt mit der unten befindlichen aber unbelasteten Trittbrettposition und ein vierter Oberflächenabschnitt mit der vom Müllwerker durch Körpergewicht belasteten Trittbrettposition.

Der dritte Oberflächenabschnitt ist vorzugsweise in Umfangsrichtung derart bemessen, dass eine Schwenkbewegung des Trittbrettes in einem Bereich von 0,5° bis 5°, besonders bevorzugt 1° bis 2° ohne Restriktionen des Fahrbetriebes möglich ist. Ein Verlassen dieses dritten Oberflächenabschnittes aufgrund einer Schwenkbewegung sowohl in Richtung des zweiten Oberflächenabschnittes als auch in Richtung des vierten Oberflächenabschnittes führt zu Restriktionen des Fahrbetriebes, um Manipulationen durch die Müllwerker zu vereiteln und eine Gefährdung des Müllwerkers zu verringern.

Eine teilweise heruntergeklappte Trittbrettposition, bei welcher der Positionsmesssensor den zweiten Oberflächenabschnitt sensiert, und die belastete Trittbrettposition, bei welcher der Positionsmesssensor den vierten Oberflächenabschnitt sensiert, ermöglichen lediglich einen eingeschränkten Fahrbetrieb des Fahrzeuges, da im ersten Fall eine Manipulation durch ein Abspannen des Trittbrettes mit Ketten vorliegen könnte oder zumindest nicht ausgeschlossen ist und im zweiten Fall ohnehin ein auf dem Trittbrett stehender Müllwerker erkannt wurde. Die vollständig hochgeklappte Trittbrettposition und die heruntergeklappte unbelastete Trittbrettposition sind dagegen im Hinblick auf Restriktionen der Fahrgeschwindigkeit und Fahrtrichtung unkritisch, so dass das Fahrzeug ohne diese Restriktionen gefahren werden kann.

Gemäß einer besonderen Ausgestaltung weisen die Oberflächenabschnitte während eines Schwenkens des Trittbrettes unterschiedliche Abstände zum Positionsmesssensor auf. Aufgrund einer Abstandsänderung während des Schwenkens erkennt der Positionsmesssensor die Änderung der Trittbrettposition.

Dabei können zwei Oberflächenabschnitte achsnah und zwei Oberflächenabschnitte achsfern angeordnet sein. Während eines Schwenkens des Trittbrettes wechseln dann die achsnahen und achsfernen Oberflächenabschnitte, so dass der Positionsmesssensor diesen Wechsel identifiziert.

So kann zum Beispiel vorgesehen sein, dass immer dann, wenn der Positionsmesssensor einen achsnahen Oberflächenabschnitt erfasst, das Fahrzeug ohne Restriktionen bezüglich der Fahrtrichtung und Fahrgeschwindigkeit bewegt werden kann. Identifiziert der Positionsmesssensor dagegen einen der achsfernen Oberflächenabschnitte, kann das Fahrzeug lediglich mit Restriktionen, das heißt mit einer maximalen Geschwindigkeit von 30 km/h ausschließlich vorwärts gefahren werden.

Die vorstehend beschriebene Zuordnung der Trittbrettpositionen kann selbstverständlich auch vertauscht ausgeführt sein, so dass die achsnahen Oberflächenabschnitte einen eingeschränkten und die achsfernen Oberflächenabschnitte einen uneingeschränkten Fahrbetrieb ermöglichen.

Ein wesentlicher Aspekt dieser Ausführungsformen ist die Erkenntnis, dass sich die Trittbrettpositionen mit Restriktionen des Fahrbetriebes mit den Trittbrettpositionen ohne Restriktionen des Fahrbetriebes abwechseln.

Das erste Element kann gemäß einer bevorzugten Ausführungsform der ersten Alternative vorzugsweise eine starr am Trittbrett befestigte Lagerhülse sein.

Vorzugsweise ist dann das zweite Element eine starr mit dem Fahrzeug verbundene Stützstruktur oder es ist in diese integriert. Die Stützstruktur leitet die vom Trittbrett über das Drehlager übertragenden Kräfte in das Fahrzeug ein. Hierfür ist die Stützstruktur fest mit dem Fahrzeug verbunden.

Die Stützstruktur nimmt zweckmäßigerweise auch einen durch die Lagerhülse hindurchreichenden Lagerbolzen auf. Der Lagerbolzen bildet gleichzeitig die Schwenkachse des Drehlagers und ist integraler Bestandteil des Drehlagers.

Gemäß einer Ausführungsform der zweiten Alternative ist das erste Element eine starr mit dem Fahrzeug verbundene Stützstruktur, die zumindest eine teilweise komplementär zu dem zweiten Element geformte Außenfläche mit der profilierten Oberfläche aufweist. Aufgrund der vorzugsweise im Wesentlichen kreisförmigen Kontur des zweiten Elementes weist die komplementär geformte Außenfläche des ersten Elementes eine vorzugsweise halbschalenartige Form auf. Die profilierte Oberfläche befindet sich dann auf der dem zweiten Element zugewandten Außenfläche des ersten Elementes.

Das zweite Element kann ein jeweils ortsfest zum Trittbrett angeordneter Lagerbolzen, eine Lagerhülse oder eine Lagerwelle sein. Aufgrund der kreisförmigen Schwenkbewegung des Trittbrettes ist das zweite Element vorzugsweise rotationssymmetrisch geformt. Der Positionsmesssensor sollte in funktionsbereiter Stellung radial innerhalb des zweiten Elementes angeordnet sein.

Vorteilhafterweise sind die achsnahen Oberflächenabschnitte aus einer Außenfläche des ersten Elementes und die achsfernen Oberflächenabschnitte aus in Umfangsrichtung auf der Außenfläche angeformten und hintereinander angeordneten Rippen gebildet. Der Positionsmesssensor identifiziert demnach während der Schwenkbewegung einen geänderten Abstand von der Außenfläche des ersten Elementes zu einer der Rippen und umgekehrt.

Alternativ zu der Ausgestaltung mit Rippen können auch die achsfernen Oberflächenabschnitte aus in Umfangsrichtung in die Außenfläche eingebrachten und hintereinander angeordneten Ausnehmungen gebildet sein. In diesem Fall erkennt der Positionsmesssensor während der Schwenkbewegung einen Wechsel von der Außenfläche des ersten Elementes zu einer darin eingebrachten Ausnehmung und umgekehrt.

Gemäß einer Ausführungsform ist mindestens ein achsnaher Oberflächenabschnitt in Umfangsrichtung kürzer als die jeweils benachbarten, achsfernen Oberflächenabschnitte. Diesem kürzeren, achsnahen Oberflächenabschnitt sollte die nach unten herausgeklappte aber unbelastete Trittbrettposition zugeordnet sein. Beim Aufsteigen des Müllwerkers auf das Trittbrett findet aufgrund der dann auf das Trittbrett einwirkenden Last lediglich ein geringer Schwenkweg des Trittbrettes in die Schwenkposition des belasteten Trittbrettes statt, so dass der in Rede stehende kürzere, achsnahe Oberflächenabschnitt entsprechend schnell aus dem Wirkbereich des Positionsmesssensors wandert und die belastete Trittbrettposition mit dem dann in Umfangsrichtung folgenden, achsfernen Oberflächenabschnitt vom Positionsmesssensor erfasst wird.

Auch die achsfernen Oberflächenabschnitte können aus einer Außenfläche des ersten Elementes gebildet sein. Hierfür bietet es sich an, dass die achsnahen Oberflächenabschnitte aus in Umfangsrichtung in die Außenfläche eingebrachten und hintereinander angeordneten Ausnehmungen gebildet sind.

Alternativ kann auch vorgesehen sein, dass die achsnahen Oberflächenabschnitte aus in Umfangsrichtung auf der Außenfläche angeformten und hintereinander angeordneten Rippen gebildet sind.

Gemäß einer anderen Ausführungsform ist mindestens ein achsferner Oberflächenabschnitt in Umfangsrichtung kürzer als die jeweils benachbarten, achsnahen Oberflächenabschnitte. Diesem kürzeren, achsfernen Oberflächenabschnitt sollte dann die unten herausgeklappte aber unbelastete Trittbrettposition zugeordnet sein. Beim Aufsteigen des Müllwerkers auf das Trittbrett findet aufgrund der dann auf das Trittbrett einwirkenden Last lediglich ein geringer Schwenkweg des Trittbrettes in die Schwenkposition des belasteten Trittbrettes statt, so dass der in Rede stehende kürzere, achsferne Oberflächenabschnittes entsprechend schnell aus dem Wirkbereich des Positionsmesssensors wandert und die belastete Trittbrettposition mit dem dann in Umfangsrichtung folgenden, achsnahen Oberflächenabschnitt vom Positionsmesssensor erfasst wird.

Bei dem Versuch, das Trittbrett mittels Ketten am Fahrzeug abzuspannen, um dadurch ein Schwenken des Trittbrettes in die Schwenkposition eines belasteten Trittbrettes zu verhindern, wird in der Regel das Trittbrett geringfügig angehoben, wodurch der kürzere, achsnahe bzw. kürzere achsferne Oberflächenabschnitt sofort aus dem Wirkbereich des Positionsmesssensor herauswandert.

Vorzugsweise sind die Rippen oder Ausnehmungen in Umfangsrichtung durch zumindest annähernd radial zur Schwenkachse verlaufende Flanken begrenzt. Die senkrecht zur äußeren Umfangswand des ersten Elementes und/oder radial zur Schwenkachse ausgerichteten Flanken sorgen für einen stufenartigen Verlauf der profilierten Oberfläche und somit für einen eindeutigen Wechsel zwischen zwei benachbarten Oberflächenabschnitten. Hieraus resultiert wiederum ein besonders exaktes Signal des Positionsmesssensors.

Vorteilhafterweise weist die Einrichtung eine an den Positionsmesssensor angeschlossene Auswerteeinheit auf und der Positionsmesssensor gibt entsprechend der Oberflächenabschnitte Signale an die Auswerteeinheit ab. Die Auswerteeinheit umfasst insbesondere einen Prozessrechner, welcher die vom Positionsmesssensor generierten Signale verarbeitet und entsprechende Signale generiert, die sich auf die Fahrzeugelektronik auswirken und/oder mittels einer Anzeigevorrichtung dargestellt werden bzw. automatisch die Fahrrestriktionen auslösen.

Vorzugsweise ist die Länge in Umfangsrichtung mindestens eines Oberflächenabschnitts einstellbar ausgeführt. Der Vorteil besteht darin, dass nach der Montage der Trittbrettvorrichtung am Fahrzeug eine Justierung der Umfangslänge des oder der Oberflächenabschnitte vorgenommen werden kann.

Damit kann beispielsweise die Umfangslänge des Oberflächenabschnitts, der der unbelasteten Trittposition zugeordnet ist, z.B. nach der Montage eingestellt werden.

Je kürzer dieser Oberflächenabschnitt ausgebildet ist oder eingestellt wird, desto empfindlicher reagiert die Vorrichtung auf Abweichungen aus der zugeordneten unbelasteten Trittposition und damit auf Manipulationsversuche der Müllwerker.

Die Einstellbarkeit der Umfangslänge eines Oberflächenabschnitts kann beispielsweise mittels einer verstellbaren Rippe oder mittels einer zusätzlichen Justierbacke realisiert werden.

Auch der Positionsmesssensor kann verstellbar zu den Oberflächenabschnitten und somit justierbar angeordnet sein.

Zum besseren Verständnis wird die Erfindung nachfolgend anhand von 15 Figuren näher erläutert. Es zeigen die
- **Fig. 1:**: eine perspektivische Ansicht auf das Heck eines Müllfahrzeugs;
- **Fig. 2:**: eine vergrößerte Ansicht eines Details aus Fig. 1
- **Fig. 3:**: eine Rückansicht auf das Müllfahrzeug mit heruntergeklappten Trittbrettern;
- **Fig. 4:**: ein Längsschnitt gemäß der Schnittebene A:A in Fig. 3 gemäß einer ersten Ausführungsform der ersten Alternative;
- **Fig. 5:**: eine schematische Seitenansicht auf eine Trittbrettvorrichtung gemäß der ersten Ausführungsform in einer ersten Trittbrettposition;
- **Fig. 6:**: eine Seitenansicht auf das Trittbrett entsprechend Fig. 5 in einer zweiten Trittbrettposition;
- **Fig. 7:**: eine Seitenansicht auf das Trittbrett entsprechend Fig. 5 in einer dritten Trittbrettposition;
- **Fig. 8:**: eine Seitenansicht auf das Trittbrett entsprechend Fig. 5 in einer vierten Trittbrettposition;
- **Fig. 9:**: eine Seitenansicht auf eine Trittbrettvorrichtung gemäß einer zweiten Ausführungsform der ersten Alternative in der vierten Trittbrettposition;
- **Fig. 10:**: eine Seitenansicht auf eine Trittbrettvorrichtung gemäß einer ersten Ausführungsform der zweiten Alternative in der vierten Trittbrettposition;
- **Fig. 11:**: eine Seitenansicht auf eine Trittbrettvorrichtung gemäß einer zweiten Ausführungsform der zweiten Alternative in der vierten Trittbrettposition;
- **Fig. 12:**: eine Seitenansicht auf eine Trittbrettvorrichtung gemäß einer dritten Ausführungsform der zweiten Alternative in der vierten Trittbrettposition;
- **Fig. 13:**: eine Seitenansicht auf eine Trittbrettvorrichtung gemäß einer vierten Ausführungsform der zweiten Alternative in der vierten Trittbrettposition;
- **Fig. 14:**: eine Seitenansicht auf eine Trittbrettvorrichtung gemäß einer dritten Ausführungsform der ersten Alternative in der vierten Trittbrettposition und
- **Fig. 15:**: eine Seitenansicht auf eine Trittbrettvorrichtung gemäß einer vierten Ausführungsform der ersten Alternative in der vierten Trittbrettposition.

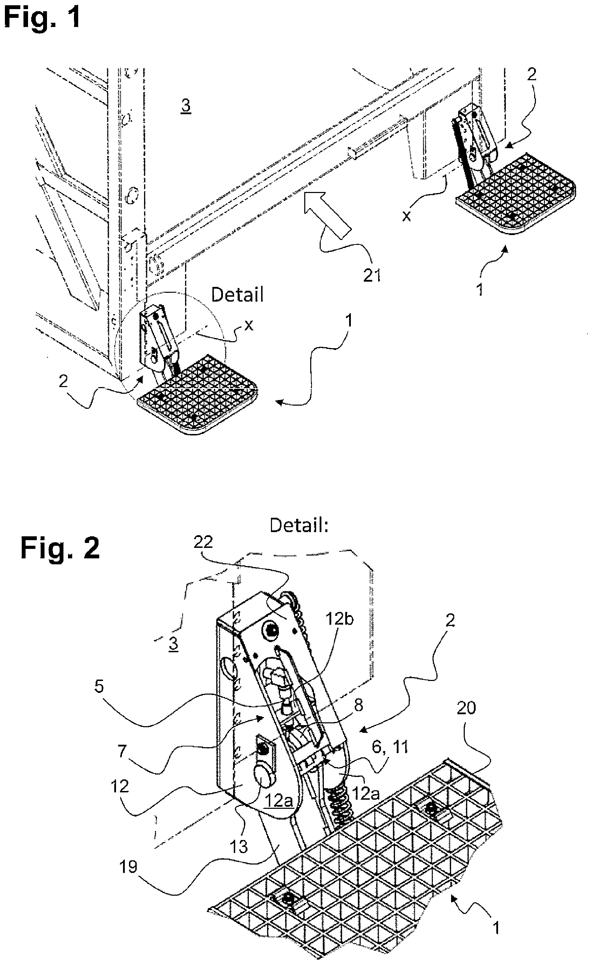

Die Fig. 1 zeigt in einer perspektivischen Ansicht das Heck eines Fahrzeugs 3, insbesondere eines Müllfahrzeugs. An beiden Seiten des Fahrzeugs 3 sind schwenkbar Trittbretter 1 angeordnet, die zwischen einer hochgeklappten Trittbrettposition und der dargestellten heruntergeklappten Position verschwenkt werden können. In heruntergeklappten Position kann ein Müllwerker beim stehenden Fahrzeug oder während langsamer Vorwärtsfahrt auf das Trittbrett steigen und mitfahren.

Für eine Schwenkbewegung des Trittbrettes 1 ist ein Drehlager 2 vorgesehen, das zwischen Trittbrett 1 und Fahrzeug 3 angeordnet ist. Das Drehlager 2 weist eine Schwenkachse x auf, die horizontal und quer zur Fahrtrichtung 21 ausgerichtet ist. In der Fig. 1 fluchten die Schwenkachsen x beider Trittbretter 1. Gemäß einer anderen - nicht dargestellten - Ausführungsform kann die Schwenkachse auch eine andere Ausrichtung, z.B. in Fahrtrichtung aufweisen.

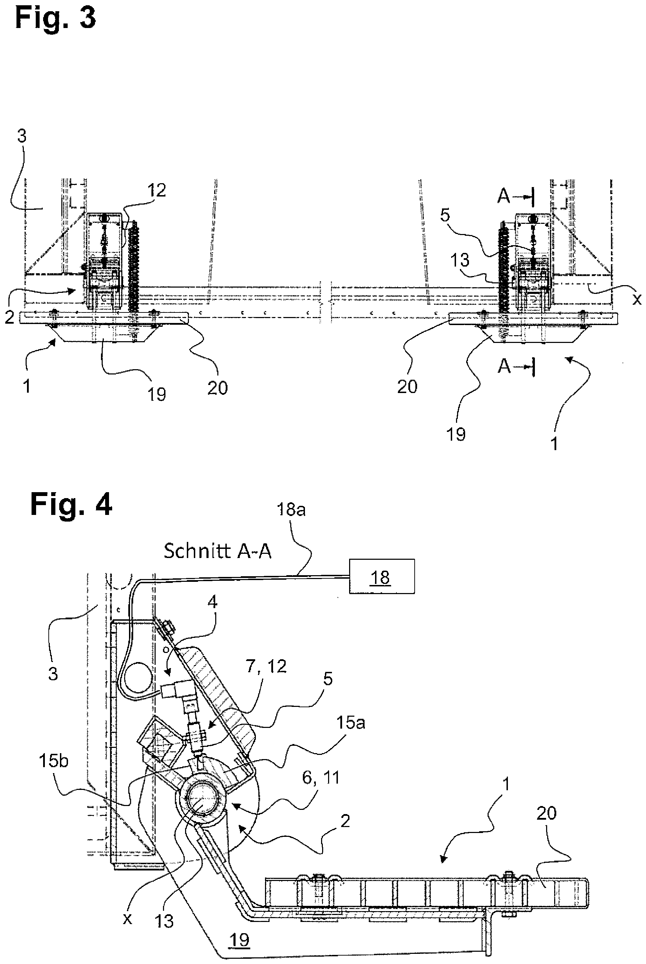

Das Drehlager 2 ist als vergrößertes Detail besonders gut in Fig. 2 und 4 zu erkennen und umfasst eine mit dem Fahrzeug 3 fest verbundene Stützstruktur 12 in Form eines U-Profils. Durch zwei parallele Schenkel 12a des U-Profils ragt ein Lagerbolzen 13, der die Schwenkachse x vorgibt und um den eine Lagerhülse 11 schwenkt. Die Schenkel 12a des U-Profils sind mit einem Steg 12b verbunden, an dem ortsfest ein Positionsmesssensor 5 angebaut ist.

Das Trittbrett 1 umfasst einen Tragarm 19 und eine fest an dem Tragarm 19 angreifende Trittplatte 20. Der Tragarm 19 wiederum ist an seinem der Trittplatte 20 gegenüberliegenden Ende fest an der Lagerhülse 11 angebracht. Somit schwenken bei dieser Ausführungsform die Trittplatte 20, der Tragarm 19 und die Lagerhülse 11 gemeinsam um den Lagerbolzen 13.

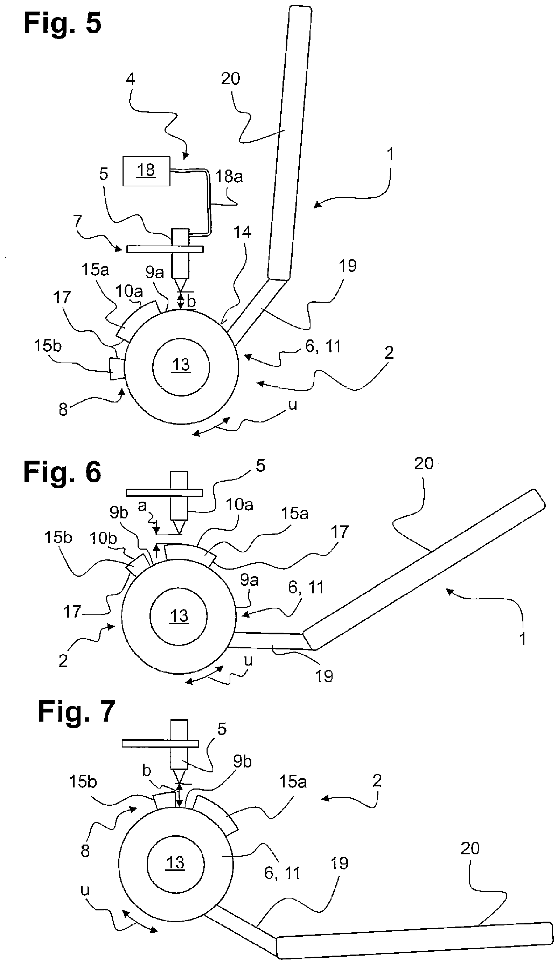

Die Lagerhülse 11 bildet ein erstes Element 6 und ist auf ihrer Außenfläche 14 (siehe Figuren 5 bis 8) mit einer profilierten Oberfläche 8 versehen, deren Aufbau und Funktionsweise für diese Ausführungsform beispielhaft anhand der Figuren 5 bis 8 näher erläutert wird.

Die Stützstruktur 12 bildet ein zweites Element 7 und trägt, ortsfest zum Fahrzeug 3, den Positionsmesssensor 5 beabstandet zu der profilierten Oberfläche 8 des ersten Elementes 6. Bei einer Schwenkbewegung des Trittbrettes 1 schwenkt die profilierte Oberfläche 8 unter dem stehenden Positionsmesssensor 5 hindurch und wird von diesem berührungslos sensiert.

Die Stützstruktur 12 ist mit einem verplombten Deckel 22 derart abgedeckt, dass es nicht möglich ist, ohne irreversible Beschädigungen des verplombten Deckels 22 den Positionsmesssensor 5 zu erkennen oder zu ergreifen. Dieses Merkmal erhöht die betriebliche Tauglichkeit des Positionsmesssensors 5 erheblich.

In der Figur 3 sind zwei Trittbretter 1 ebenfalls in einer herausgeklappten Schwenkposition dargestellt. Darüber hinaus zeigt die Fig. 3 die Schnittebene A-A des in Fig. 4 vergrößert dargestellten Längsschnittes. Das Drehlager 2 umfasst das am Fahrzeug 3 befestigte, zweite Element 7, welches als Stützstruktur 12 die in das Trittbrett 1 eingeleiteten Lasten in das Fahrzeug 3 überträgt. Das erste Element 6 ist durch eine Lagerhülse 11 gebildet, die zusammen mit dem Trittbrett 1, bestehend aus dem Tragarm 19 und der Trittplatte 20, um den Lagerbolzen 13 schwenkbar gelagert ist.

In Umfangsrichtung u (siehe Figuren 5 bis 8) ist auf die Lagerhülse 11 eine erste Rippe 15a und, beabstandet hierzu, eine zweite Rippe 15b aufgebracht. Die Rippen 15a, 15b umgeben mit ihrem äußeren Mantelflächenabschnitt die Umfangsfläche der Lagerhülse 11 konzentrisch. Der von dem zweiten Element 7 gehaltene Positionsmesssensor 5 misst den Abstand zu der Lagerhülse 11 oder zu einer der Rippen 15a, 15b und gibt dieses Signal über eine Anschlussleitung 18a an eine Auswerteeinheit 18 weiter. In der Auswerteeinheit 18 wird anhand des eingehenden Signals ein Ausgangssignal generiert, welches einen uneingeschränkten Fahrbetrieb des Fahrzeuges 3, das heißt Rückwärtsfahrt und Vorwärtsfahrt auch über 30 km/h, oder einen eingeschränkten Fahrbetrieb, das heißt lediglich Vorwärtsfahrt langsamer als 30 km/h, zulässt.

Die Auswerteeinheit 18, die Anschlussleitung 18a und der Positionsmesssensor 5 bilden eine strukturell zusammenhängende Einrichtung 4.

Die Figuren 5 bis 9 sowie Figuren 14 und 15 betreffen die erste Alternative, wonach das erste Element schwenkbar am Fahrzeug und das zweite Element ortsfest zum Fahrzeug angeordnet ist.

Die Figuren 5 bis 8 verdeutlichen die insgesamt vier auftretenden Trittbrettpositionen einer ersten Ausführungsform der ersten Alternative. In der Fig. 5 ist das Trittbrett 1 maximal hochgeschwenkt, so dass keine Position vorliegt, in welcher ein Müllwerker auf dem Trittbrett 1 stehen kann. Der im zweiten Element 7 eingebaute Positionsmesssensor 5 erkennt die Entfernungsunterschiede auf der Außenfläche 14 der Lagerhülse 11. Die Position des Positionsmesssensors 5 ist stets konstant, so dass ein erster, bezüglich der Lagerhülse 11 achsnaher Oberflächenabschnitt 9a detektiert wird und der Positionsmesssensor 5 einen langen Sensorabstand b erkennt. Folglich kann das Fahrzeug 3 uneingeschränkt sowohl rückwärts als auch vorwärts gefahren werden.

In der Fig. 6 befindet sich das Trittbrett 1 in einer teilweise heruntergeschwenkten Position, in welcher die Lagerhülse 11 sich gegenüber der in Fig. 5 gezeigten Ausgangsstellung in Umfangsrichtung u teilweise gedreht hat und dadurch der Positionsmesssensor 5 einen kurzen Sensorabstand a bis zu einem ersten achsfernen Oberflächenabschnitt 10a im Bereich der ersten Rippe 15a identifiziert. Diese Position des Trittbrettes 1 stellt sich auch ein, wenn seitens der Müllwerker versucht wird, die Trittbrettvorrichtung durch Abspannen von Ketten zu manipulieren und dadurch das Trittbrett 1 ohne Restriktionen der Fahrgeschwindigkeit und Fahrtrichtung nutzen zu können. Aus diesem Grund hat es sich als sinnvoll herausgestellt, dass die Auswerteeinheit 18 bei einem teilweise herausgeschwenkten Trittbrett 1 entsprechend Fig. 6 lediglich einen eingeschränkten Fahrbetrieb mit maximal 30 km/h bei Vorwärtsfahrt und keine Rückwärtsfahrt ermöglicht. Die Erstreckung der Rippe 15a in Umfangsrichtung u ist dabei so bemessen, dass eine Benutzung des Trittbrettes 1 aufgrund dessen Neigung ausgeschlossen ist. Sobald zum Beispiel eine Neigung des Trittbrettes 1 von über 60° zur Horizontalen vorliegt, kann das Trittbrett 1, auch wenn es mit Ketten abgespannt sein sollte, nicht mehr vom Müllwerker standsicher genutzt werden, so dass ab diesem Bereich die Rippe 15a enden und der erste achsferne Oberflächenabschnitt 10a in den ersten achsnahen Oberflächenabschnitt 9a übergehen kann.

Die Fig. 7 zeigt das Trittbrett 1 in einer vollständig heruntergeschwenkten Position, jedoch ohne Auflast. Diese Position stellt sich beispielsweise ein, wenn die Müllwerker vergessen haben, vor einer länger andauernden Fahrt das Trittbrett 1 wieder hochzuklappen. Die Lagerhülse 11 ist gegenüber der Position in Fig. 6 weiter in Umfangsrichtung u gedreht, so dass der Positionsmesssensor 5 nunmehr wieder einen langen Sensorabstand b erfasst. Dieser lange Sensorabstand b ist durch einen zweiten achsnahen Oberflächenabschnitt 9b vorgegeben, der in Umfangsrichtung u durch die erste und zweite Rippe 15a, 15b begrenzt ist. Da kein Müllwerker auf dem Trittbrett 1 steht, kann das Fahrzeug 3 ohne Restriktionen vorwärts und rückwärts bewegt werden.

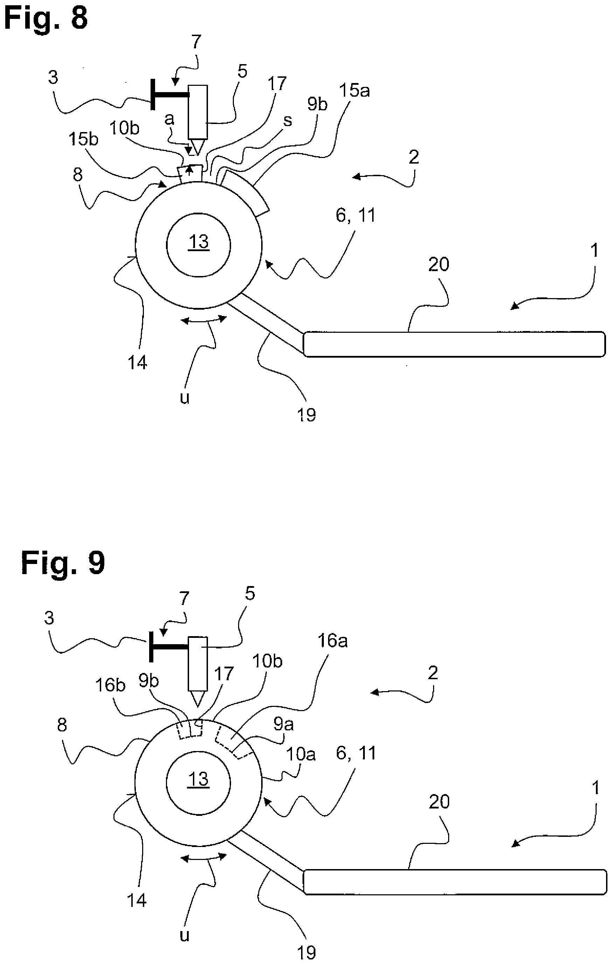

Die Fig. 8 verdeutlicht die Position des Trittbrettes 1 während eines darauf stehenden Müllwerkers. Das Trittbrett 1 ist weiter nach unten geschwenkt und hat dadurch auch das erste Element 6 weiter im Uhrzeigersinn gedreht, so dass sich nunmehr die zweite Rippe 15b unter den Positionsmesssensor 5 befindet. Der Positionsmesssensor 5 erfasst daher lediglich noch einen kurzen Sensorabstand a, da sich die Messstrecke zwischen Positionsmesssensor 5 und einem zweiten achsfernen Oberflächenabschnitt 10b verkürzt hat.

Zwischen der ersten Rippe 15a und der zweiten Rippe 15b existiert ein Spaltraum s, dessen Dimensionierung in Umfangsrichtung u durch die Länge des zweiten achsnahen Oberflächenabschnittes 9b vorgegeben ist. Bei der Dimensionierung des Spaltraumes s ist zu beachten, dass durch die Auflast des Müllwerkers auf dem Trittbrett 1 lediglich eine geringe Rotationsbewegung des ersten Elementes 6 ausgelöst wird und dadurch der zweite achsnahe Oberflächenabschnitt 9b und der Spaltraum s in Umfangsrichtung u entsprechend kurz ausgeführt sind, damit trotz dieser kurzen Rotationsbewegung durch Auflast des Müllwerkers der zweite achsferne Oberflächenabschnitt 10b unter den Positionsmesssensor 5 wandert und die korrespondierende Trittbrettposition bei Auflast durch einen Müllwerker erfasst werden kann.

Auch sollte zumindest eine im Übergansbereich zwischen dem zweiten achsnahen Oberflächenabschnitt 9b und dem zweiten achsfernen Oberflächenabschnitt 10b liegende Flanke 17 möglichst in radialer Richtung zu der Schwenkachse x (siehe Fig. 1 und 3) und damit auch zu dem ersten Element 6 ausgerichtet sein. Hierdurch ergibt sich eine Sprungstelle zwischen dem zweiten achsnahen Oberflächenabschnitt 9b und dem zweiten achsfernen Oberflächenabschnitt 10b, die besonders treffsicher von dem Positionsmesssensor 5 identifiziert wird. Für eine präzise Zuordnung der übrigen Trittbrettpositionen sollten, wie zum Beispiel in Fig. 6 kenntlich gemacht, auch die weiteren Flanken 17 der Rippen 15a, 15b radial zur Schwenkachse x verlaufen.

Die Fig. 9 zeigt eine zweite Ausführungsform der ersten Alternative der Erfindung, bei welcher jedoch anstelle von ersten und zweiten Rippen 15a, 15b in das erste Element 6 erste und zweite Ausnehmungen 16a, 16b eingebracht sind. Wie in den zuvor beschriebenen Ausführungsformen befindet sich auch hier der Positionsmesssensor 5 in dem zweiten Element 7 ortsfest fixiert zum Fahrzeug 3 und gegenüberliegend zu der profilierten Oberfläche 8 des ersten Elementes 6. Das erste Element 6 verschwenkt zusammen mit dem Trittbrett 1 und befindet sich in der Darstellung der Fig. 9 in der heruntergeklappten, vom Müllwerker belasteten Position.

Bei der in Fig. 9 dargestellten Ausführungsform sind der erste achsferne Oberflächenabschnitt 10a der vollständig hochgeklappten Trittbrettposition entsprechend Fig. 5 und der erste achsnahe Oberflächenabschnitt 9a der teilweise heruntergeschwenkten Trittbrettposition entsprechend Fig. 6 zugeordnet. Die vollständig heruntergeklappte Position des Trittbrettes 1 ohne Belastung durch einen Müllwerker entspricht dem vom Positionsmesssensor 5 zu erkennenden zweiten achsfernen Oberflächenabschnitt 10b. Die Position eines vom Müllwerker belasteten Trittbrettes 1 identifiziert der Positionsmesssensor 5 sobald der zweite achsnahe Oberflächenabschnitt 9b in dessen Wirkbereich gelangt. Insbesondere die Flanke 17, welche hier im Übergangsbereich zwischen dem zweiten achsfernen Oberflächenabschnitt 10b und dem zweiten achsnahen Oberflächenabschnitt 9b angeordnet ist, sollte stufenartig ausgebildet und somit radial zum ersten Element 6, zum Lagerbolzen 13 und somit auch zur Schwenkachse x (siehe Fig. 4) ausgerichtet sein.

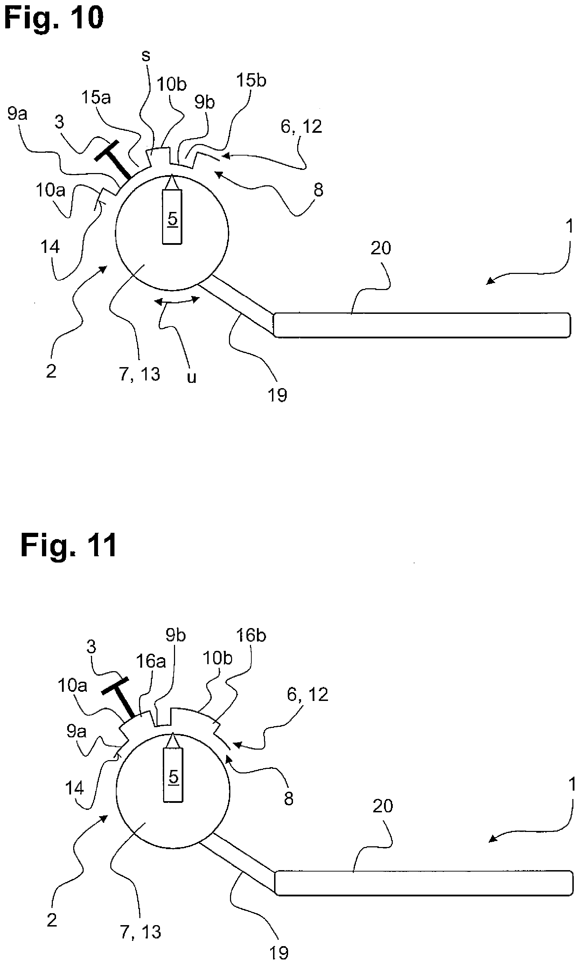

Die Figuren 10 bis 13 betreffen die zweite Alternative, wonach das erste Element ortsfest am Fahrzeug und das zweite Element schwenkbar angeordnet ist.

Die Fig. 10 zeigt eine erste bevorzugte Ausführungsform der zweiten Alternative, bei welcher das erste Element 6 mit seiner profilierten Oberfläche 8 Bestandteil der ortsfest am Fahrzeug angreifenden Stützstruktur 12 ist. Das zweite Element 7 besteht aus einem Lagerbolzen 13 und dem darin ortsfest eingesetzten Positionsmesssensor 5. Der Lagerbolzen 13 schwenkt in Umfangsrichtung u zusammen mit dem Trittbrett 1 um die Schwenkachse x (siehe Fig. 4), wobei der Positionsmesssensor 5 die profilierte Oberfläche 8 erfasst. Die profilierte Oberfläche 8 umfasst hierbei insbesondere die gegenüber der Außenfläche 14 in Richtung des zweiten Elementes 7 vorstehenden Rippen 15a, 15b.

Solange der Positionsmesssensor 5 den ersten achsfernen Oberflächenabschnitt 10a erkennt, befindet sich das Trittbrett 1 in einer hochgeschwenkten Position. Bei einem Herunterklappen des Trittbrettes 1 schwenkt der Positionsmesssensor 5 im Uhrzeigersinn an dem ersten Element 6 vorbei und identifiziert dabei den ersten achsnahen Oberflächenabschnitt 9a. Dieser wird solange sensiert, bis das Trittbrett 1 eine ausgeklappte aber unbelastete Position erreicht hat und die Rippe 15a nicht mehr vom Positionsmesssensor 5 erfasst wird. In dieser Position des Trittbrettes 1 steht der Positionsmesssensor 5 dem zweiten achsfernen Oberflächenabschnitt 10b gegenüber. Erst unter Belastung des Trittbrettes 1 durch einen Müllwerker schwenkt das erste Element 6 weiter und der Positionsmesssensor 5 erkennt dann die zweite Rippe 15b mit der zugehörigen zweiten achsnahen Oberflächenabschnitt 9b.

Die Fig. 11 stellt eine zweite bevorzugte Ausführungsform der zweiten Alternative der Erfindung dar, die konzeptionell weitgehend identisch mit der Ausführung entsprechend Fig. 10 ist. Anstelle der Rippen 15a, 15b befinden sich an derselben Stelle die Ausnehmungen 16a, 16b.

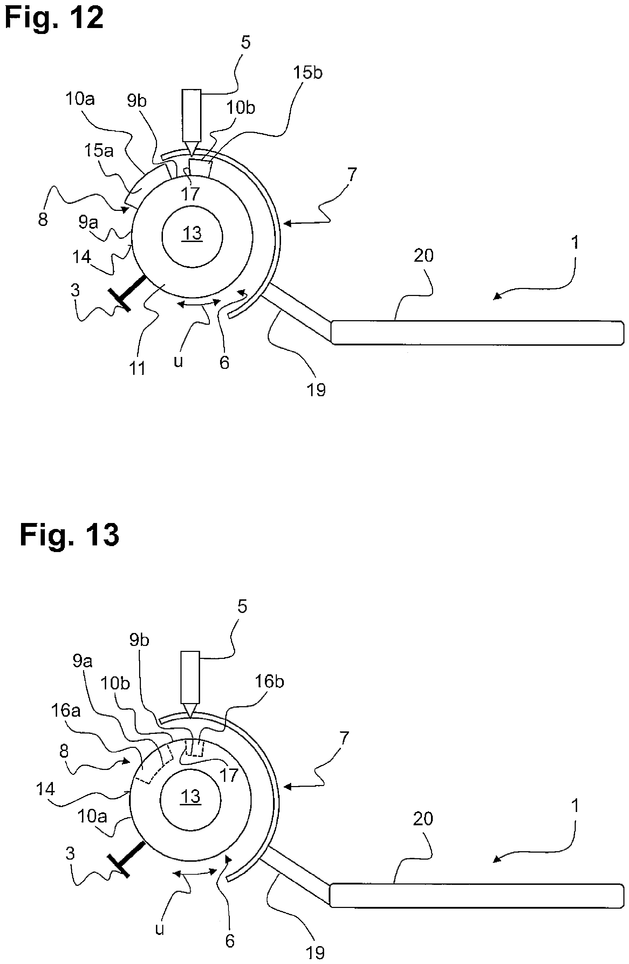

Anhand der Fig. 12 wird eine dritte bevorzugte Ausführungsform der zweiten Alternative der Erfindung offenbart, bei welcher der Positionsmesssensor 5 in einem halbschalenartigen, zweiten Element 7 befestigt ist, an dem außerdem der Tragarm 19 des Trittbrettes 1 starr angreift. Hierdurch dreht der Positionsmesssensor 5 zusammen mit dem zweiten Element 7 um das konzentrisch darin angeordnete erste Element 6. Bei einem vollständig hochgeklappten Trittbrett 1 steht der Positionsmesssensor 5 dem ersten achsnahen Oberflächenabschnitt 9a gegenüber und wandert dann, bei einem Herunterklappen des Trittbrettes 1 über die erste Rippe 15a hinweg und erreicht in ausgeklappter aber unbelasteter Position des Trittbrettes 1 den zweiten achsnahen Oberflächenabschnitt 9b. Sobald das Trittbrett 1 von einem Müllwerker bestiegen wird, schwenkt der Positionsmesssensor 5 weiter und überschreitet die Flanke 17 der zweiten Rippe 15b. In dieser Position kann das Fahrzeug 3 lediglich in Vorwärtsfahrt mit eingeschränkter Geschwindigkeit von maximal 30 km/h und gar nicht in Rückwärtsfahrt betrieben werden.

Die vierte Ausführungsform der zweiten Alternative ist in der Fig. 13 dargestellt, die weitgehend mit der Ausführungsform entsprechend Fig. 12 korrespondiert. Abweichend davon sind in dem ersten Element 6 anstelle von erster und zweiter Rippe 15a, 15b an gleicher Position eine erste und zweite Ausnehmung 16a, 16b eingebracht.

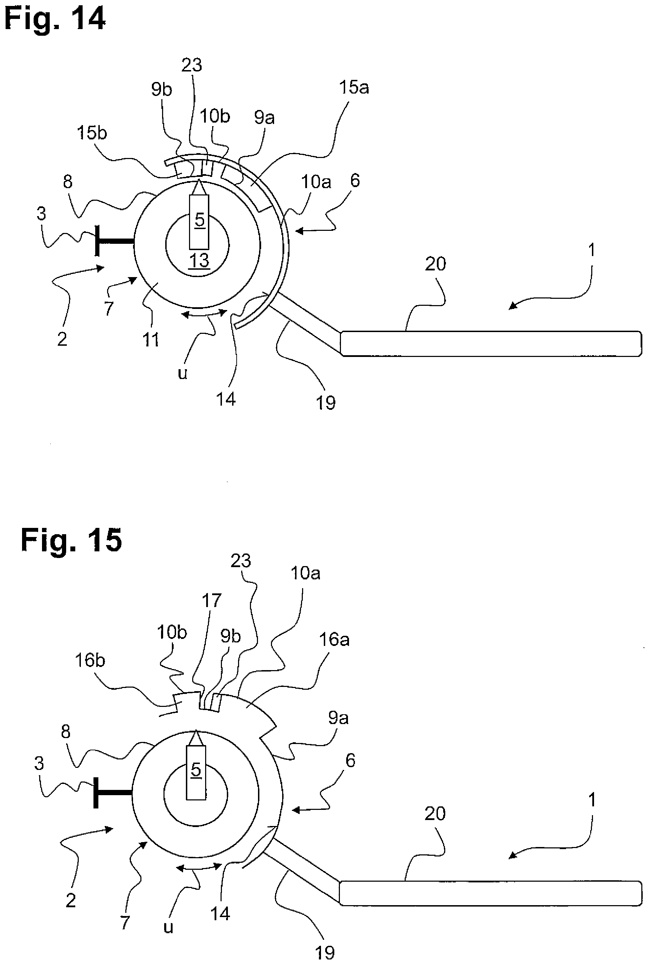

Die Fig. 14 zeigt eine dritte bevorzugte Ausführungsform der ersten Alternative der Erfindung, bei welcher der Positionsmesssensor 5 mittels des zweiten Elementes 7 ortsfest zum Fahrzeug 3 angeordnet ist. In der dargestellten Ausführungsform ist der Positionsmesssensor 5 an der Lagerhülse 11 befestigt, die wiederum an dem Fahrzeug 3 angreift. Es wäre ebenfalls möglich, den Positionsmesssensor 5 in den Lagerbolzen 13 zu integrieren, diesen drehfest mit dem Fahrzeug zu verbinden und die Lagerhülse 11 wegzulassen.

Das erste Element 6 umgreift das zweite Element 7 zumindest teilweise und ist koaxial dazu ausgerichtet. Bei einer Schwenkbewegung des Trittbrettes 1 gleitet die Außenfläche 14 des ersten Elements 6 an dem Wirkungsbereich des Positionsmesssensors 5 vorbei, so dass dieser ausgehend von einer vollständig eingeklappten Position des Trittbrettes 1 zunächst den ersten achsfernen Oberflächenabschnitt 10a und anschließend die Rippe 15a mit dem ersten achsnahen Oberflächenabschnitt 9a registriert. Bei einer weiteren Schwenkbewegung des Trittbrettes 1 nach unten gelangt der zweite achsferne Oberflächenabschnitt 10b in den Wirkungsbereich des Positionsmesssensors 5 und bei Auflast durch das Körpergewicht eines Müllwerkers der zweite achsnahe Oberflächenabschnitt 9b der zweiten Rippe 15b.

Der dritte Oberflächenabschnitt, welcher in Fig. 14 mit dem zweiten, achsfernen Oberflächenabschnitt 10b korrespondiert, spannt in der Praxis häufig einen Winkel von lediglich 1° bis 2° auf. Aus diesem Grund werden bei der Herstellung der Trittbrettvorrichtung zunächst die erste und zweite Rippe 15a, 15b als eine einzige, durchgehende Rippe hergestellt und erst in montiertem Zustand der dritte Oberflächenabschnitt eingefräst, wodurch die erste und zweite Rippe 15a, 15b entsteht.

Um die Einstellbarkeit des dritten Oberflächenabschnittes, hier des zweiten, achsfernen Oberflächenabschnittes 10b zu verbessern, kann es auch vorgesehen sein, an der ersten und/oder der zweiten Rippe 15a, 15b eine Justierbacke 23 anzubringen, die in Umfangsrichtung u und somit gegenüber den Rippen 15a, 15b verstellbar ist. Die Justierbacke ist beispielsweise in der Rippe 15b angeordnet und kann aus der Rippe 15b herausgeschoben werden.

In der Fig. 15 ist eine vierte Ausführungsform der ersten Alternative dargestellt, wobei in dem ersten Element 6 anstelle von erster und zweiter Rippe 15a, 15b entsprechende erste und zweite Ausnehmungen 16a, 16b vorgesehen sind. Insofern erkennt der Positionsmesssensor 5 bei einem hochgeklappten Trittbrett 1 zunächst den ersten achsnahen Oberflächenabschnitt 9a und im Verlauf einer weiteren Schwenkbewegung des Trittbrettes 1 zunächst die erste Ausnehmung 16a mit dem ersten achsfernen Oberflächenabschnitt 10a und anschließend den zweiten achsnahen Oberflächenabschnitt 9b. Das belastete Trittbrett 1 schwenkt geringfügig weiter im Uhrzeigersinn, so dass die Flanke 17 den Positionsmesssensor 5 überstreicht und dieser von dort an den zweiten achsfernen Oberflächenabschnitt 10b erkennt.

Die Justierbacke 23 kann bei Vorhandensein von Ausnehmungen 16a, 16b auch im Bereich einer oder beider Ausnehmung(en) 16a, 16b angeordnet sein und dadurch die Einstellbarkeit des dritten Oberflächenabschnittes, hier des zweiten, achsnahen Oberflächenabschnittes 9b, zu ermöglichen.

In allen Ausführungsformen kann der Positionsmesssensor 5 auch verstellbar am zweiten Element 7 angeordnet sein. Die Verstellbarkeit beinhaltet sowohl eine Veränderung des Abstandes des Positionsmesssensors 5 zur profilierten Oberfläche 8 des ersten Elementes 6 (Verschiebung des Positionsmesssensors in Richtung seiner Längsachse) als auch beispielsweise eine Justierung bezüglich der Flanken 17 der Rippen 15a,b (Verschiebung des Positionsmesssensors senkrecht zu seiner Längsachse bzw. Drehen des Positionsmesssensors).

### Bezugszeichenliste

- 1: Trittbrett
- 2: Drehlager
- 3: Fahrzeug
- 4: Einrichtung
- 5: Positionsmesssensor
- 6: erstes Element
- 7: zweites Element
- 8: profilierte Oberfläche
- 9a: erster achsnaher Oberflächenabschnitt
- 9b: zweiter achsnaher Oberflächenabschnitt
- 10a: erster achsferner Oberflächenabschnitt
- 10b: zweiter achsferner Oberflächenabschnitt
- 11: Lagerhülse
- 12: Stützstruktur
- 12a: Schenkel Stützstruktur
- 12b: Steg Stützstruktur
- 13: Lagerbolzen
- 14: Außenfläche
- 15a: erste Rippe
- 15b: zweite Rippe
- 16a: erste Ausnehmung
- 16b: zweite Ausnehmung
- 17: Flanke
- 18: Auswerteeinheit
- 18a: Anschlussleitung
- 19: Tragarm
- 20: Trittplatte
- 21: Fahrtrichtung
- 22: verplombter Deckel
- 23: Justierbacke

- a: kurzer Sensorabstand
- b: langer Sensorabstand
- s: Spaltraum
- u: Umfangsrichtung
- x: Schwenkachse

## Patentansprüche

1. Trittbrettvorrichtung mit einem Trittbrett (1) und mit einem Drehlager (2) zur schwenkbaren Anbringung des Trittbrettes (1) an einem Fahrzeug (3) sowie mit einer Einrichtung (4) zur Bestimmung der Schwenkposition des Trittbrettes (1), wobei diese Einrichtung (4) mindestens einen Positionsmesssensor (5) aufweist,
wobei ein erstes Element (6) mit einer profilierten Oberfläche (8) ausgebildet ist und ein zweites Element (7) den Positionsmesssensor (5) trägt, wobei das erste Element (6) um das Drehlager (2) schwenkbar zum Fahrzeug (3) und das zweite Element (7) ortsfest zum Fahrzeug (3) oder das erste Element (6) ortsfest zum Fahrzeug (3) und das zweite Element (7) um das Drehlager (2) schwenkbar zum Fahrzeug (3) angeordnet ist,
wobei der Positionsmesssensor (5) der profilierten Oberfläche (8) gegenüberliegt und bei einer Schwenkbewegung des Trittbrettes (1) eine Relativbewegung zwischen dem Positionsmesssensor (5) und der profilierten Oberfläche (8) erfolgt,
und wobei die profilierte Oberfläche (8) bezogen auf eine Schwenkachse (x) des Drehlagers (2) achsnahe und achsferne Oberflächenabschnitte (9a, 9b, 10a, 10b) aufweist, wobei ein erster Oberflächenabschnitt (9a, 10a) mit einer hochgeklappten Trittbrettposition und ein zweiter Oberflächenabschnitt (10a, 9a) mit der Trittbrettposition während des Schwenkens korrespondiert,
**dadurch gekennzeichnet,**
**dass** ein dritter und vierter Oberflächenabschnitt (9b, 10b) vorgesehen sind, wobei der dritte Oberflächenabschnitt (9b, 10b) mit der unten befindlichen aber unbelasteten Trittbrettposition und der vierte Oberflächenabschnitt (10b, 9b) mit der vom Müllwerker durch Körpergewicht belasteten Trittbrettposition korrespondiert.

2. Trittbrettvorrichtung nach Anspruch 1, **dadurch gekennzeichnet, dass** jedem Oberflächenabschnitt (9a, 9b, 10a, 10b) eine Schwenkposition des Trittbrettes (1) zugeordnet ist.

3. Trittbrettvorrichtung nach Anspruch 1 oder 2, **dadurch gekennzeichnet, dass** die Oberflächenabschnitte (9a, 9b, 10a, 10b) während eines Schwenkens des Trittbrettes (1) unterschiedliche Abstände (a, b) zum Positionsmesssensor (5) aufweisen.

4. Trittbrettvorrichtung nach einem der Ansprüche 1 bis 3, **dadurch gekennzeichnet, dass** zwei Oberflächenabschnitte (9a, 9b) achsnah und zwei Oberflächenabschnitte (10a, 10b) achsfern angeordnet sind.

5. Trittbrettvorrichtung nach einem der Ansprüche 1 bis 4, **dadurch gekennzeichnet, dass** sich die achsnahen Oberflächenabschnitte (9a, 9b) mit den achsfernen Oberflächenabschnitten (10a, 10b) abwechseln.

6. Trittbrettvorrichtung nach einem der Ansprüche 1 bis 5, **dadurch gekennzeichnet, dass** das erste Element (6) eine starr am Trittbrett (1) befestigte Lagerhülse (11) ist.

7. Trittbrettvorrichtung nach einem der Ansprüche 1 bis 6, **dadurch gekennzeichnet, dass** das zweite Element (7) eine starr mit dem Fahrzeug (3) verbundene Stützstruktur (12) ist.

8. Trittbrettvorrichtung nach einem der Ansprüche 1 bis 5, **dadurch gekennzeichnet, dass** das erste Element (6) eine starr mit dem Fahrzeug (3) verbundene Stützstruktur (12) ist, die zumindest eine teilweise komplementär zu dem zweiten Element (7) geformte Außenfläche (14) mit der profilierten Oberfläche (8) aufweist.

9. Trittbrettvorrichtung nach Anspruch 8, **dadurch gekennzeichnet, dass** das zweite Element (7) ein jeweils ortsfest zum Trittbrett (1) angeordneter Lagerbolzen (13), eine Lagerhülse (11) oder eine Lagerwelle ist.

10. Trittbrettvorrichtung nach Anspruch 4, **dadurch gekennzeichnet, dass** die achsnahen Oberflächenabschnitte (9a, 9b) aus einer Außenfläche (14) des ersten Elementes (6) gebildet sind.

11. Trittbrettvorrichtung nach Anspruch 10, **dadurch gekennzeichnet, dass** die achsfernen Oberflächenabschnitte (10a, 10b) aus in Umfangsrichtung (u) auf der Außenfläche (14) angeformten und hintereinander angeordneten Rippen (15a, 15b) gebildet sind.

12. Trittbrettvorrichtung nach Anspruch 10, **dadurch gekennzeichnet, dass** die achsfernen Oberflächenabschnitte (10a, 10b) aus in Umfangsrichtung (u) in die Außenfläche (14) eingebrachten und hintereinander angeordneten Ausnehmungen (16a, 16b) gebildet sind.

13. Trittbrettvorrichtung nach einem der Ansprüche 10 bis 12, **dadurch gekennzeichnet, dass** mindestens ein achsnaher Oberflächenabschnitt (9b) in Umfangsrichtung (u) kürzer als die jeweils benachbarten, achsfernen Oberflächenabschnitte (10a, 10b) ist.

14. Trittbrettvorrichtung nach Anspruch 4, **dadurch gekennzeichnet, dass** die achsfernen Oberflächenabschnitte (10a, 10b) aus einer Außenfläche (14) des ersten Elementes (6) gebildet sind.

15. Trittbrettvorrichtung nach Anspruch 14, **dadurch gekennzeichnet, dass** die achsnahen Oberflächenabschnitte (9a, 9b) aus in Umfangsrichtung (u) in die Außenfläche (14) eingebrachten und hintereinander angeordneten Ausnehmungen (16a, 16b) gebildet sind.

16. Trittbrettvorrichtung nach Anspruch 14, **dadurch gekennzeichnet, dass** die achsnahen Oberflächenabschnitte (9a, 9b) aus in Umfangsrichtung (u) auf der Außenfläche (14) angeformten und hintereinander angeordneten Rippen (15a, 15b) gebildet sind.

17. Trittbrettvorrichtung nach einem der Ansprüche 14 bis 16, **dadurch gekennzeichnet, dass** mindestens ein achsferner Oberflächenabschnitt (10b) in Umfangsrichtung (u) kürzer als die jeweils benachbarten, achsnahen Oberflächenabschnitte (9a, 9b) ist.

18. Trittbrettvorrichtung nach einem der Ansprüche 1 bis 17, **dadurch gekennzeichnet, dass** die Einrichtung (4) eine an den Positionsmesssensor (5) angeschlossene Auswerteeinheit (18) aufweist und der Positionsmesssensor (5) entsprechend der Oberflächenabschnitte (9a, 9b, 10a, 10b) Signale an die Auswerteeinheit (18) abgibt.

## Claims

1. Footboard apparatus comprising a footboard (1) and comprising a pivot bearing (2) for pivotably attaching the footboard (1) to a vehicle (3), and comprising a device (4) for determining the pivot position of the footboard (1), said device (4) comprising at least one position-measuring sensor (5),
a first element (6) being designed to have a profiled surface (8) and a second element (7) carrying the position-measuring sensor (5), the first element (6) being arranged so as to be pivotable about the pivot bearing (2) relative to the vehicle (3) and the second element (7) being arranged so as to be stationary relative to the vehicle (3), or the first element (6) being arranged so as to be stationary relative to the vehicle (3) and the second element (7) being arranged so as to be pivotable about the pivot bearing (2) relative to the vehicle (3),
the position-measuring sensor (5) being opposite the profiled surface (8) and, during a pivoting movement of the footboard (1), a relative movement between the position-measuring sensor (5) and the profiled surface (8) occurs,
and the profiled surface (8) comprising surface portions (9a, 9b, 10a, 10b) that are close to and further from a pivot axis (x) of the pivot bearing (2), a first surface portion (9a, 10a) corresponding to a stowed footboard position and a second surface portion (10a, 9a) corresponding to the footboard position during pivoting,
**characterised in that**
a third and fourth surface portion (9b, 10b) are provided, the third surface portion (9b, 10b) corresponding to the lowered but unloaded footboard position and the fourth surface portion (10b, 9b) corresponding to the footboard position loaded by the body weight of the refuse collector.

2. Footboard apparatus according to claim 1, **characterised in that** a pivot position of the footboard (1) is assigned to each surface portion (9a, 9b, 10a, 10b).

3. Footboard apparatus according to either claim 1 or claim 2, **characterised in that** the surface portions (9a, 9b, 10a, 10b) are at different distances (a, b) from the position-measuring sensor (5) during pivoting of the footboard (1).

4. Footboard apparatus according to any one of claims 1 to 3, **characterised in that** two surface portions (9a, 9b) are arranged so as to be close to the axis and two surface portions (10a, 10b) are arranged so as to be further from the axis.

5. Footboard apparatus according to any one of claims 1 to 4, **characterised in that** the surface portions (9a, 9b) close to the axis alternate with the surface portions (10a, 10b) further from the axis.

6. Footboard apparatus according to any one of claims 1 to 5, **characterised in that** the first element (6) is a sleeve bearing (11) that is rigidly fastened to the footboard (1).

7. Footboard apparatus according to any one of claims 1 to 6, **characterised in that** the second element (7) is a support structure (12) that is rigidly connected to the vehicle (3).

8. Footboard apparatus according to any one of claims 1 to 5, **characterised in that** the first element (6) is a support structure (12) that is rigidly connected to the vehicle (3) and comprises at least one outer surface (14) which comprises the profiled surface (8) and is shaped so as to be partially complementary to the second element (7).

9. Footboard apparatus according to claim 8, **characterised in that** the second element (7) is a bearing pin (13), a sleeve bearing (11) or a bearing shaft that is in each case arranged so as to be stationary relative to the footboard (1).

10. Footboard apparatus according to claim 4, **characterised in that** the surface portions (9a, 9b) close to the axis are formed by an outer surface (14) of the first element (6).

11. Footboard apparatus according to claim 10, **characterised in that** the surface portions (10a, 10b) further from the axis are formed by ribs (15a, 15b) arranged one behind the other and moulded on the outer surface (14) in the circumferential direction (u).

12. Footboard apparatus according to claim 10, **characterised in that** the surface portions (10a, 10b) further from the axis are formed by recesses (16a, 16b) arranged one behind the other and made in the outer surface (14) in the circumferential direction (u).

13. Footboard apparatus according to any one of claims 10 to 12, **characterised in that** at least one surface portion (9b) close to the axis is shorter, in the circumferential direction (u), than the respectively adjacent surface portions (10a, 10b) further from the axis.

14. Footboard apparatus according to claim 4, **characterised in that** the surface portions (10a, 10b) further from the axis are formed by an outer surface (14) of the first element (6).

15. Footboard apparatus according to claim 14, **characterised in that** the surface portions (9a, 9b) close to the axis are formed by recesses (16a, 16b) arranged one behind the other and made in the outer surface (14) in the circumferential direction (u).

16. Footboard apparatus according to 14, **characterised in that** the surface portions (9a, 9b) close to the axis are formed by ribs (15a, 15b) arranged one behind the other and moulded on the outer surface (14) in the circumferential direction (u).

17. Footboard apparatus according to any one of claims 14 to 16, **characterised in that** at least one surface portion (10b) further from the axis is shorter, in the circumferential direction (u), than the respectively adjacent surface portions (9a, 9b) close to the axis.

18. Footboard apparatus according to any one of claims 1 to 17, **characterised in that** the device (4) comprises an evaluation unit (18) connected to the position-measuring sensor (5) and the position-measuring sensor (5) sends signals to the evaluation unit (18) in accordance with the surface portions (9a, 9b, 10a, 10b).

## Revendications

1. Dispositif à marchepied, comprenant un marchepied (1) et un palier tournant (2) affecté au montage pivotant dudit marchepied (1) sur un véhicule (3), ainsi qu'un système (4) conçu pour déterminer l'emplacement occupé par ledit marchepied (1) suite à un pivotement, ce système (4) présentant au moins un capteur (5) de mesure d'emplacements,
un premier élément (6) étant muni d'une surface profilée (8), et un second élément (7) portant ledit capteur (5) de mesure d'emplacements,
ledit premier élément (6) étant monté à pivotement par rapport au véhicule (3), autour du palier tournant (2), et ledit second élément (7) étant monté fixe par rapport audit véhicule (3), ou bien ledit premier élément (6) étant monté fixe par rapport audit véhicule (3), et ledit second élément (7) étant monté à pivotement par rapport audit véhicule (3), autour dudit palier tournant (2),
sachant que le capteur (5) de mesure d'emplacements est disposé en vis-à-vis de la surface profilée (8) et qu'un mouvement relatif, entre ledit capteur (5) de mesure d'emplacements et ladite surface profilée (8), s'opère lors d'un mouvement pivotant du marchepied (1),
et sachant que ladite surface profilée (8) comporte des régions (9a, 9b, 10a, 10b) proches d'un axe de pivotement (x) du palier tournant (2) et éloignées dudit axe, une première région (9a, 10a) de la surface concordant avec un emplacement du marchepied relevé par pivotement, et une deuxième région (10a, 9a) de ladite surface concordant avec l'emplacement occupé par ledit marchepied au cours du pivotement,
**caractérisé par**
la présence de troisième et quatrième régions (9b, 10b) de la surface, la troisième région (9b, 10b) de ladite surface concordant avec l'emplacement que le marchepied occupe en position basse, sans toutefois être contraint, et la quatrième région (10b, 9b) de ladite surface concordant avec l'emplacement dudit marchepied auquel le ripeur impose une charge par son poids corporel.

2. Dispositif à marchepied, selon la revendication 1, **caractérisé par le fait qu'**un emplacement du marchepied (1), pris par pivotement, est associé à chaque région (9a, 9b, 10a, 10b) de la surface.

3. Dispositif à marchepied, selon la revendication 1 ou 2, **caractérisé par le fait que** les régions (9a, 9b, 10a, 10b) de la surface présentent, au cours d'un pivotement du marchepied (1), des distances différentes (a, b) par rapport au capteur (5) de mesure d'emplacements.

4. Dispositif à marchepied, selon l'une des revendications 1 à 3, **caractérisé par le fait que** deux régions (9a, 9b) de la surface sont situées à proximité de l'axe, et deux régions (10a, 10b) de ladite surface sont éloignées dudit axe.

5. Dispositif à marchepied, selon l'une des revendications 1 à 4, **caractérisé par le fait que** les régions (9a, 9b) de la surface, proches de l'axe, alternent avec les régions (10a, 10b) de ladite surface éloignées dudit axe.

6. Dispositif à marchepied, selon l'une des revendications 1 à 5, **caractérisé par le fait que** le premier élément (6) est une douille de palier (11) fixée rigidement au marchepied (1).

7. Dispositif à marchepied, selon l'une des revendications 1 à 6, **caractérisé par le fait que** le second élément (7) est une structure d'appui (12) fixée rigidement au véhicule (3).

8. Dispositif à marchepied, selon l'une des revendications 1 à 5, **caractérisé par le fait que** le premier élément (6) est une structure d'appui (12) qui est fixée rigidement au véhicule (3), et est munie d'au moins une surface extérieure (14) présentant la surface profilée (8) et dotée d'une forme partiellement complémentaire de celle du second élément (7).

9. Dispositif à marchepied, selon la revendication 8, **caractérisé par le fait que** le second élément (7) est un tourillon (13), une douille de palier (11) ou un arbre de palier occupant, respectivement, une position fixe par rapport au marchepied (1).

10. Dispositif à marchepied, selon la revendication 4, **caractérisé par le fait que** les régions (9a, 9b) de la surface, proches de l'axe, sont formées par une surface extérieure (14) du premier élément (6).

11. Dispositif à marchepied, selon la revendication 10, **caractérisé par le fait que** les régions (10a, 10b) de la surface, éloignées de l'axe, sont formées par des nervures (15a, 15b) façonnées sur la surface extérieure (14), dans le sens circonférentiel (u), et placées les unes derrière les autres.

12. Dispositif à marchepied, selon la revendication 10, **caractérisé par le fait que** les régions (10a, 10b) de la surface, éloignées de l'axe, sont formées par des évidements (16a, 16b) pratiqués dans la surface extérieure (14), dans le sens circonférentiel (u), et agencés en succession mutuelle.

13. Dispositif à marchepied, selon l'une des revendications 10 à 12, **caractérisé par le fait qu'**au moins une région (9b) de la surface située à proximité de l'axe est plus courte, dans le sens circonférentiel (u), que les régions (10a, 10b) de ladite surface qui sont éloignées dudit axe et occupent des positions respectivement voisines.

14. Dispositif à marchepied, selon la revendication 4, **caractérisé par le fait que** les régions (10a, 10b) de la surface, éloignées de l'axe, sont formées par une surface extérieure (14) du premier élément (6).

15. Dispositif à marchepied, selon la revendication 14, **caractérisé par le fait que** les régions (9a, 9b) de la surface, proches de l'axe, sont formées par des évidements (16a, 16b) pratiqués dans la surface extérieure (14), dans le sens circonférentiel (u), et agencés en succession mutuelle.

16. Dispositif à marchepied, selon la revendication 14, **caractérisé par le fait que** les régions (9a, 9b) de la surface, proches de l'axe, sont formées par des nervures (15a, 15b) façonnées sur la surface extérieure (14), dans le sens circonférentiel (u), et placées les unes derrière les autres.

17. Dispositif à marchepied, selon l'une des revendications 14 à 16, **caractérisé par le fait qu'**au moins une région (10b) de la surface située à distance de l'axe est plus courte, dans le sens circonférentiel (u), que les régions (9a, 9b) de ladite surface qui sont proches dudit axe et occupent des positions respectivement voisines.

18. Dispositif à marchepied, selon l'une des revendications 1 à 17, **caractérisé par le fait que** le système (4) est pourvu d'une unité d'évaluation (18) connectée au capteur (5) de mesure d'emplacements, et ledit capteur (5) de mesure d'emplacements délivre, à ladite unité d'évaluation (18), des signaux correspondant aux régions (9a, 9b, 10a, 10b) de la surface.
